# EUROPEAN PATENT SPECIFICATION

(11) **EP 3 194 871 B1**
(45) Date of publication and mention of the grant of the patent: **15.12.2021**
(21) Application number: 15766113.3
(22) Date of filing: 15.09.2015
(51) Int. Cl.: F25D 29/00, B60P 3/20, B60K 35/00

(54) **CONTROL UNIT FOR TRANSPORT REFRIGERATION DEVICE**
STEUEREINHEIT FÜR EINE TRANSPORTKÜHLVORRICHTUNG
UNITÉ DE COMMANDE POUR DISPOSITIF DE TRANSPORT RÉFRIGÉRÉ

(30) Priority: 16.09.2014 FI 20145807
(43) Date of publication of application: 26.07.2017
(73) Proprietor: BITZER Kühlmaschinenbau GmbH, 71065 Sindelfingen (DE)
(72) Inventor: SAIKKONEN, Kari, FI-60100 Seinäjoki (FI); RANTA-AHO, Rami, FI-60101 Seinäjoki (FI); SCHWARTZ, Mia, DK-6400 Sønderborg (DK); SCHMIDT, Henrik Thomsen, DK-6400 Sønderborg (DK)
(74) Representative: Kolster Oy Ab
(86) International application number: PCT/EP2015/071049
(87) International publication number: WO 2016/041938

(56) References cited:
- EP-A1- 2 666 660
- EP-A1- 2 666 660
- EP-A2- 1 466 784
- EP-A2- 1 466 784
- WO-A2-2012/021377
- WO-A2-2012/021377
- DE-A1-102005 023 544
- DE-A1-102008 023 505
- DE-A1-102008 023 505
- US-A1- 2002 101 334
- US-A1- 2002 101 334
- US-A1- 2009 165 475
- US-A1- 2009 165 475
- US-B1- 6 378 319
- US-B1- 6 378 319

## Description

### FIELD OF THE INVENTION

The present invention relates to transport refrigeration devices, and more particularly to control units for transport refrigeration devices.

### BACKGROUND OF THE INVENTION

Transport refrigeration devices are refrigeration devices installed to vehicles for refrigeration of goods during transportation. Typical transport refrigeration devices include one or more refrigerated cargo spaces, where the goods are contained for refrigeration during transportation. A user panel of the transport refrigeration device in conventionally mounted to an instrument panel in the vehicle cabin such that the driver of the vehicle can control the transport refrigeration device. A typical user panel has a display for displaying information and buttons arranged around the display such that the driver can control the transport refrigeration device via the user panel.

Publication US 63783169 describes a delivery vehicle having a room temperature compartment, a freezer compartment and a refrigerated compartment. A control unit allows the driver to monitor and control the temperature in the freezer compartment and the refrigerated compartment from the driver area. A room temperature compartment may share air with the driver area.

Publication DE 102008023505 introduces a display device for a motor vehicle. The display has parts for displaying information in different applications e.g. radio application, with different colors and/or brightness in a preset color-coding. A programmable light source produces light in different color-codings outside the display. The color-codings of the light source are performed based on the preset color-coding. An interactive operating device displays the applications that are operated by touching surface area of the device.

Publication WO 2012021377 shows a control device having a graphical user interface for controlling the operation of a transport refrigeration unit. The graphical user interface may include a menu structure having multiple levels of menu options, executable functions and data items. Access to the various menus may be user-specific and controlled so that a subset of the information in the menu structure is available to normal users, and larger subsets of the information are available to advanced users having higher levels of authorization to the menus and information contained in the graphical user interface device.

Publication EP 1466784 has an on-vehicle display system capable of enhancing visibility by changing color tone or the like according to vehicle states and demands of a user. It includes a display device configured to display an image, a palette data storing unit in which a plurality of color data to be used for the image by the display device are stored. The palette data-storing unit is constituted of a plurality of palette table blocks corresponding to a plurality of image groups into which the image is divided according to the display contents.

Publication US 2009165475 describes an icebox with external controls. The icebox includes an insulated container having one or more compartments. One or more temperature sensors take temperature measurements of the one or more compartments. An externally visible panel displays the temperature measurements and coldness settings corresponding to the temperature measurements. An externally accessible input allows selective changes of the coldness setting.

Publication EP 2666660 introduces an automotive instrument cluster human machine interface (HMI) having a display screen and an input. The display screen displays a polyhedral with each face of the polyhedron having unique information. The input is operable to rotate the polyhedron such that a new face is displayed on the display screen.

Publication US 2002101334 shows a display screen, which switches between a monitor display and a trouble display. If a pause switch on the trouble display screen is operated, the display screen can be fixed to the trouble display for a prescribed time or until a restart or release switch on the trouble display is operated. The monitor display and the trouble display can be cyclically displayed.

The design of the vehicle cabin and the instrument panel include many proprietary solutions depending on the vehicle manufacturer. These solutions concern usability for example in terms of traffic safety and user experience. The proprietary solutions are different between vehicle manufacturers as a result of product differentiation for one reason. Since transport refrigeration devices, including their user panels, are conventionally retrofitted to vehicles, their adaptation to the proprietary solutions of the vehicles is difficult and particularly in terms of supporting traffic safety and user experience.

### BRIEF DESCRIPTION OF THE INVENTION

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

The object of the invention is achieved by a control unit, a method, a computer program and a vehicle that are characterized by what is stated in the independent claims. Further embodiments of the invention are disclosed in the dependent claims.

Although the various aspects, embodiments and features of the invention are recited independently, it should be appreciated that all combinations of the various aspects, embodiments and features of the invention are possible when being within the scope of the present invention as claimed.

Some embodiments provide improvements comprising adapting illumination color of the control unit for a transport refrigeration device.

Some embodiments provide improvements in traffic safety of vehicles including a transport refrigeration device.

### BRIEF DESCRIPTION OF THE DRAWINGS

In the following the invention will be described in greater detail by means of preferred embodiments with reference to the accompanying drawings, in which
Figure 1 illustrates a vehicle including a transport refrigeration device, according to an embodiment;
Figure 2 illustrates a vehicle cabin including a control unit for a transport refrigeration device, according to an embodiment;
Figure 3 illustrates a user interface of the control unit for a transport refrigeration device, according to an embodiment;
Figures 4a and 4b illustrate displaying views corresponding to a plurality of cargo spaces, according to embodiments;
Figure 5 illustrates a menu for selecting a color setting, according to an embodiment;
Figure 6a illustrates a method according to an embodiment;
Figure 6b illustrates a method of adjusting a color setting of a control unit; and
Figure 7 illustrates a block diagram of the control unit for a transport refrigeration device, according to an embodiment.

### DETAILED DESCRIPTION OF THE INVENTION

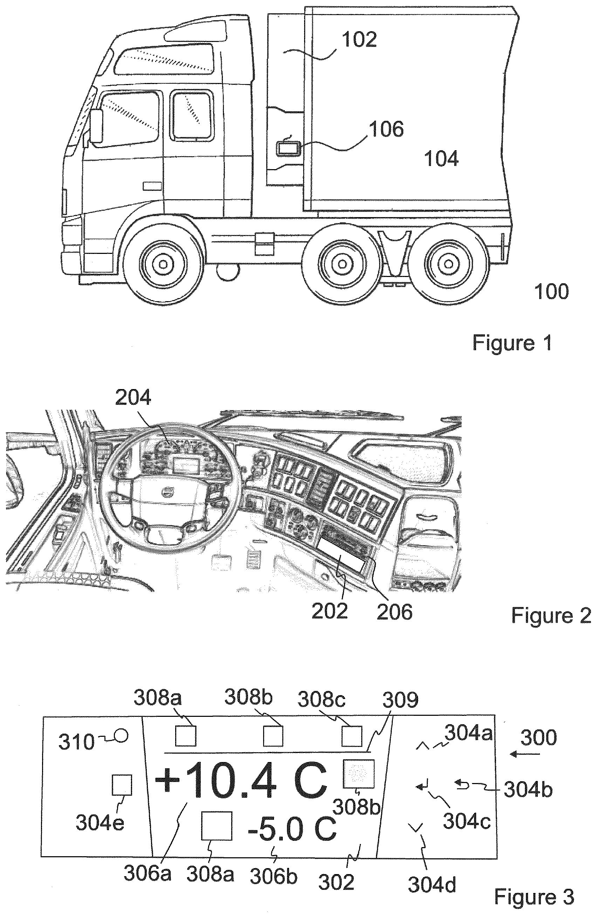

Figure 1 illustrates a vehicle 100 including a transport refrigeration device 102, according to an embodiment. The vehicle may be a road vehicle such as a van, a truck a trailer, for example. The transport refrigeration device may include or may be connected to one or more cargo spaces 104 such that the cargo spaces are refrigerated by a refrigeration unit of the transport refrigeration device. Typically, the refrigeration unit transfers heat from the cargo spaces such that the cargo spaces and the goods contained therein are refrigerated. The refrigeration may be performed by circulating air and/or coolant between the cargo spaces and the refrigeration unit, such that heat is transferred from the air and/or coolant returning to the refrigeration unit from the cargo spaces and cooled air and/or coolant is returned to the cargo spaces from the refrigeration unit. The transport refrigeration device may comprise a control unit 106 for monitoring and controlling the operation of the transport refrigeration device. The temperature in the cargo space may be set by a user, e.g. driver of the vehicle. The refrigeration unit refrigerates the cargo space to a target temperature set by the user. Depending on the current temperature, the cargo space is heated or cooled by the refrigeration unit towards the targeted temperature. The control unit may be located within the vehicle cabin or outside the vehicle cabin, for example attached to the refrigeration unit of the transport refrigeration device or the housing of the transport refrigeration device.

Figure 2 illustrates a vehicle cabin including a control unit 202 for a transport refrigeration device according to an embodiment. The vehicle cabin may be in a vehicle described above with Figure 1. The vehicle may have one or more control units for the transport refrigeration device. Accordingly, one of the control units may be within the vehicle cabin and one of the control units may be outside the vehicle cabin. The control unit located in the vehicle cabin allows the driver to monitor and control the transport refrigeration unit while he is inside the vehicle cabin e.g. during driving of the vehicle. The vehicle cabin includes an instrument panel including various units which are vehicle control devices and displays, wherein the vehicle control devices and displays comprise an onboard computer display and one or more of the following: a speedometer (204), switches for headlights and wipers, and a radio display (206). One or more of the units may be illuminated by light sources. The color of light illuminated by the units is referred to as a vehicle instrument panel color. Typical vehicle instrument panel colors include red, blue and green. The control unit may be installed to a slot in the instrument panel such that only one side of the control unit is visible to the driver for control and monitor the operation of the transport refrigeration device. Thereby, the control unit may be perceived by the driver essentially as a panel, i.e. a user panel, for operating the transport refrigeration device.

Preferably the control unit has dimensions that allow the control unit to be installed to the instrument panel to a slot for a conventional broadcast radio receiver, e.g. FM-radio (Frequency Modulation -radio), in the instrument panel. The slots for broadcast radio receivers are conventionally referred to as DIN (Deutsches Institut für Normung) slots. The broadcast radio receiver slot may be a single DIN or a double DIN slot. Accordingly, the size of the control unit may substantially match to the size of a single DIN slot or a double DIN slot. The DIN slot is defined in the standard ISO 7736 that may be referred to for details of the DIN slot. The single DIN slot is 2-1/8" (50mm) high and 7-1/8" (180mm) wide. A double DIN slot has double the height of the single DIN slot, thus 100mm. The double DIN slot has the same width as the single DIN slot.

Figure 3 illustrates a user interface 300 of the control unit for a transport refrigeration device, according to an embodiment. The user interface may be formed by a visible side of the control unit to the user, when the control unit is installed to a vehicle. Thereby, the user interface may be referred to as a user panel. The control unit may be installed to an instrument panel in a vehicle cabin as illustrated in Figure 2.

A multi-color display 302 forms at least part of the user interface or substantially the whole user interface. The multi-color display may display information, for example graphical elements and/or text, formed by pixels. The displayed information may be used by the user to monitor operation of the transport refrigeration device.

The multi-color display may be a touch screen that provides both displaying information and receiving commands from the driver by gestures on the touch screen. The touch screen may be a multi-touch screen. The multi-touch screen may be capable of detecting more than one input signal, i.e. touch of the user. Such multi-touch screens are used for example in present smartphones. The multi-touch screen may provide operation of the control unit by gestures including e.g. swiping, zooming, etc. Therefore, it should be appreciated that the user interface may be provided using the multi-color display substantially without any excess buttons around the display.

On the other hand the user interface may be provided by a combination of the multi-color display 302 and a plurality of user operable buttons 304a, 304b, 304c, 304d, 304e arranged around the display.

The multi-color display displays information using a color setting that defines one or more illumination colors of the multi-color display. The illumination colors corresponds to vehicle instrument panel colors. By choosing a color setting which corresponds to the vehicle instrument panel color, multi-color display and vehicle instrument panel are illuminated in the same color scheme. Preferably, also the buttons are illuminated by the color setting. The buttons may be illuminated in the same color as the multi-color display such that the buttons and the multi-color display are both illuminated in the vehicle instrument panel color. Vehicle instrument panel colors may include red, blue and green, for example. The buttons may be transparent such that a light source within the control unit may illuminate one or more of the buttons using the vehicle instrument panel color.

A multi-color display may refer to a display that is capable of displaying colors and shades of two or more colors. The multi-color display may be an Liquid Crystal Display (LCD) display. Typical multi-color displays are capable of displaying colors between 256 and 16.7 million colors. Suitable multi-color displays for embodiments are used in smart phones. The size of the multi-color display may be at most the size of the DIN slot or a double DIN slot. When one or more buttons are arranged around the multi-color display, the size of the display is substantially less in width and/or height direction of the single or double DIN slot.

The buttons may be covered by a film, for example a plastic film, for protecting the buttons from dirt. Also other synthetic materials than plastic may be used. The buttons may be operated by the user exerting a force, e.g. by a finger, on the button such that the area of the button receiving the force is moved to the direction of the force. Accordingly, a button on the control unit installed to the instrument panel may be moved inwards to the instrument panel, when the button is pressed. Preferably, the film protecting the button extends over one or more of the buttons such that the film forms a flush surface over the buttons.

The protective film over the buttons may include symbols corresponding to the functionality of each of the buttons. The symbols are positioned on the buttons or next to the button the symbol corresponds to. In this way the user knows the function of the button from the symbol associated to the button by the location of the symbol. Light Emitting Diodes (LEDs) that may be illuminated in one or more colors may be used as light sources for illuminating the buttons.

In an embodiment, the control unit may include a voice receiver, for example a microphone for receiving voice commands from the user. Accordingly, commands may be obtained from the user as voice commands. The voice commands may be used in various embodiments herein to obtain commands from the user. Accordingly, it should be appreciated that in various embodiments described herein commands may be obtained from the user using one or more of a touch screen, buttons and a voice receiver.

The voice receiver may be included in the control device having a multi-color display as described above. The multi-color display may be a touch screen and/or have buttons for receiving commands from the user. It should be appreciated that a combination of touch screen and voice receiver in a control unit provides that the control unit may be operated by the user without excess buttons around the multi-color display and even without touching the control unit.

The multi-color display may display one or more views. In Figure 3, a view for displaying temperature information corresponding to a single cargo space is illustrated. The temperature information may include a current temperature 306a of the cargo space, a target temperature 306b of the cargo space, a status indicator 308b for the current temperature and a symbol 308a for the target temperature. The current temperature may be measured by a sensor installed to the cargo space. The target temperature may be set by the driver via the user interface. The status indicator 308b may indicate an operation, e.g. cooling, heating or defrosting, performed by the transport refrigeration device to the cargo space transport refrigeration device. In the illustration, the status indicator next to the current temperature, 10.4 degrees, indicates that the cargo space is being cooled towards the target temperature -5.0 degrees. The status indicator may include a symbol for each operation. The cooling and heating of the cargo space may indicate an operational status of a refrigeration unit of the transport refrigeration device. The indicator for cooling may be a snow flake and the indicator for heating or defrosting may be steam or a flame, for example.

The view may include a status and messaging portion above the temperature information. The status and messages 308a, 308b, 308c may include text and/or symbols for informing the driver about alerts and/or operational status of the control unit and the transport refrigeration device. The status and messaging portion may be separated from the temperature information by a graphical element 309, for example a line. The separation of the messages and the temperature information enables the driver to monitor the temperature information quickly while driving and without significantly reducing traffic safety.

The control unit may include one or more sensors for measuring conditions within the vehicle cabin. The user interface may include an opening 310 for the sensor. The sensor may be a light sensor. The sensor may be used to measure brightness and/or color of light. The brightness may be measured, e.g. by measuring an amount of light.

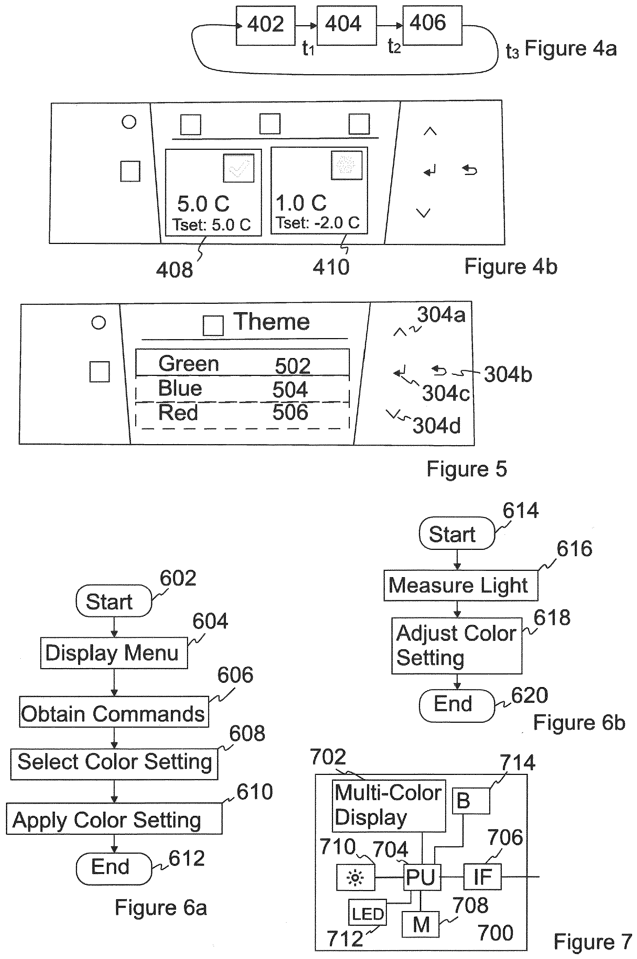

Figures 4a and 4b illustrate displaying views corresponding to a plurality of cargo spaces, according to embodiments. Each view may be arranged to display information on a multi-color display of the control unit as described in Figure 3. The cargo spaces may have different current temperatures and target temperatures. Thereby, also the information, e.g. status indicators, may be different.

Figure 4a illustrates displaying views 402, 404, 406 corresponding to a plurality of cargo spaces on a user interface. The plurality of views may be arranged to be displayed in a sequence. In this way the user interface only has to display information regarding one cargo space at a time and the size of the displayed information may be kept high. The sequence of views is illustrated in Figure 4a. Each view is displayed for a time period t₁, t₂, t₃. The time period may be specific to each view or the time period may be the same for all the views. In this way a view corresponding to each cargo space may be viewed at a time and for a specified time. The time period may be e.g. 5 or 10 seconds. The sequence of views is preferably rotational such that the information regarding cargo spaces may be provided continuously. The sequence of views provides that the driver may be displayed information regarding a plurality of cargo spaces without needing to touch the control unit for switching the views.

In an embodiment, the sequence of the plurality of views 402, 404, 406 may be arranged to be displayed in a sequence as controlled by commands of the user via a touch screen. The sequence may be a rotational sequence such that the number of transitions of views between the last view and the first view may be kept low. The touch screen may be a multi-touch screen. Transition between views may effected by a gesture of the user on the touch screen. The gesture may be for example the user swiping the screen. The swiping gesture may be performed across the multi-color display. The swiping may be performed for example in a horizontal direction, vertical direction or diagonally across the multi-color display. The horizontal direction corresponds in an implementation of the control unit in a road vehicle, e.g. a truck , the direction from left to right or right to left as perceived by the driver. In a similar manner, the vertical direction corresponds to the direction upwards or downwards as perceived by the driver in the road vehicle. However, the directions of swiping may be determined in any angle with respect to the horizontal direction and/or to the vertical direction such that the user experience for the driver is maintained irrespective of the vehicle position to the ground.

In an embodiment, the views 402, 404, 406 may be displayed as a sequence, where transitions between the views may be performed on the basis of a time period and a gesture of the user. Each view may be displayed for a time period. However, a transition between the views may take place earlier than the time period if the user makes a gesture, e.g. a swiping gesture, on a touch screen displaying the views. The sequence may be a rotational sequence as described above.

Figure 4b illustrates views 408, 410 for displaying temperature information corresponding to a plurality of cargo spaces on a user interface simultaneously. When the views are arranged in parallel, the driver may obtain information regarding both of the cargo spaces without touching the control unit to switch views.

Figure 5 illustrates a menu for selecting a color setting, according to an embodiment. The menu may be displayed on a multi-color display as described in Figure 3. The menu provides selecting the color setting of the control unit such that the illumination color of the control unit may be adapted. The adaptation of the illumination color allows that the illumination color may be matched to different vehicle instrument panel colors. The menu comprises at least two elements 502, 504, 506 that may be selected by a user via the user interface. There may be more than two elements, for example three, four or any number of elements. Accordingly, the menu may comprise a plurality of elements. The elements may be text or symbols that indicate corresponding color settings for the multicolor display. In Figure 5 the element 'Green' 502 is selected as indicated by a solid line around the element. The elements 'Blue' and 'Red' are below the 'Green' and are surrounded by a dashed line to indicate that they are not selected. The elements may be selected by the driver issuing commands. The commands may be issued by buttons that may correspond to the buttons described in Figure 3. When the multi-color display is a touch screen, the commands may be received via the touch screen. When the control unit includes a voice receiver, the commands may be received over voice commands uttered by the driver. The commands may comprise movement commands between the menu elements and selecting an element. The elements may correspond to color settings of the control unit. Accordingly, selection of an element by the driver causes the corresponding color setting to be applied to the control unit, whereby the user interface of the control unit may be illuminated in a in a color, e.g. the vehicle instrument panel color, defined by the applied color setting. In this way the illumination of the control unit may be adapted. Accordingly, the control unit may be illuminated by a light corresponding to the instrument panel light of the vehicle. One or more graphical objects displayed on the multi-color display and/or buttons may be illuminated in the color defined by the applied color setting. Preferably all the graphical objects and/or buttons are illuminated such that illumination of the control unit supports traffic safety in an optimal manner. It should be appreciated that in case the control unit is implemented by a touch screen, there may be no buttons in the user interface, whereby buttons are not illuminated.

Figure 6a illustrates a method according to an embodiment. The method may be performed by a control unit according to an embodiment. The control unit may be switched 602 on and operational such that a driver may enter commands to the control unit. In 604 at least one view including at least one graphical element may be displayed. The view may comprise a menu and/or temperature information corresponding to a single cargo space of the transport refrigeration device. The menu may be as described in Figure 5. Figures 4a and 4b illustrate examples of the views. One or more commands from the user may be obtained 606. The commands may be obtained by the driver making selections by pushing the buttons on the user interface. The commands may include movement commands in the menu between elements of the menu and selections of one or more specific elements in the menu. In 608, a color setting for the multicolor display may be selected on the basis of the commands of the driver. The color setting may be selected from at least two color settings. The color settings define illumination colors of the multi-color display. Each color setting may include one or more illumination colors. Illumination colors defined by one of the color settings may be different from the illumination colors defined by another color setting. On the other hand different color settings may include the same or partly the same illumination colors. The illumination colors may include violet, orange, yellow, red, blue and green. Also other colors may be included in the color settings. In an embodiment the illumination colors correspond to vehicle instrument panel colors.

The illumination colors of the multi-color display colors may be defined by corresponding wavelengths, and the colors may include for example the colors defined in Table 1.

**Table 1 Illumination colors of multi-color display**

| Colors | Frequency | Wavelength |
|---|---|---|
| violet | 668-789 THz | 380-450 nm |
| blue | 606-668 THz | 450-495 nm |
| green | 526-606 THz | 495-570 nm |
| yellow | 508-526 THz | 570-590 nm |
| orange | 484-508 THz | 590-620 nm |
| red | 400-484 THz | 620-750 nm |

In 610, the selected color setting may be applied to the multi-color display of the control unit. The view may be displayed using the applied color setting, wherein the at least graphical element is illuminated in a color defined by the applied color setting. A color setting may comprise definitions of colors of graphical objects and/or buttons of the control unit. Accordingly, the applying may comprise selecting a color setting, where the colors of the graphical objects and/or buttons are illuminated in the color defined by the color setting. In this way, illumination of the control unit may be adapted. The color setting may define at least one color, for example a color in the Table 1.

In an embodiment the illumination colors correspond to vehicle instrument panel colors, whereby one or more graphical objects and/or buttons may be illuminated in a color that may correspond or substantially match to the color of light illuminated by the vehicle instrument panel, i.e. the vehicle instrument panel color. In this way the color setting of the multi-color display may be set according to the light illuminated by the vehicle instrument panel.

Examples of the graphical elements comprise lines, symbols, and geometrical forms. Illuminating the graphical elements by the vehicle instrument panel color supports traffic safety by avoiding distracting the user by light sources having different colors in the instrument panel. Preferably, all the graphical objects are illuminated such that the instrument panel, including the control unit, a speedometer etc., is illuminated in the same color in all the units. In this way distractions from the control unit to the driver may be kept low.

The selected color setting may be applied both to the buttons on the control unit and the multi-color display, whereby the buttons and the multi-color display may apply the same color setting. Accordingly, the color setting may be applied 610 to the buttons and to the multi-color display such that they are illuminated in the same color, e.g. the vehicle instrument panel color.

The method 612 may end after the color setting of the control unit is applied, whereby the control unit is illuminated by light having a color defined by one of the color settings. The color may be the vehicle instrument panel color. In this way the illumination of the control unit may be adapted to conditions surrounding the control unit, for example the illumination of the instrument panel. The instrument panel may include the control unit displaying graphical objects, buttons of the control unit, a speedometer etc., whereby all the units in the instrument panel may be illuminated in the same. In this way distractions from the control unit to the driver may be kept low.

Figure 6b illustrates a method of adjusting a color setting of a control unit. The method may start 614, after a color setting has been applied in item 608. The method may be performed in a control unit including a light sensor for measuring brightness. The light sensor may measure 616 an amount of light around the control unit, for example within a vehicle cabin, where the control unit is installed to. The sensor may be capable of measuring color of the light in addition to the amount of light. In 618, the color setting of the control unit may be adjusted on the basis of the amount of light and/or color of light measured by the brightness sensor. The adjustment may cause adjusting the brightness and/or color of light illuminated by the multi-color display. The adjustment of the color setting on the basis of the brightness provides that the illumination of the control unit may be adjusted to changes of light conditions, e.g. the time of day, the instrument panel color intensity and light color of the instrument panel. Adjusting the brightness of the control unit provides that distractions to the driver of the vehicle may be kept low even if lighting conditions vary. The adjustment of the color of light illuminated by the multi-color display may comprise changing the color setting to match the color of light illuminated by the instrument panel. In this way the color setting of the control unit may be changed automatically without user intervention.

In an example of adjusting the illumination of the control unit, when the amount of light measured by the sensor is high, the brightness of the control unit may be increased.

In another example of adjusting the illumination of the control unit, when the amount of light measured by the sensor is low, the brightness of the control unit may be decreased, i.e. the control unit may be dimmed.

Applying both of the above examples, the illumination of the control unit may be adjusted to adapt to both high and low amounts of light.

In an embodiment, the method may start by applying a default color setting in 614, whereby the user selection of the color setting described in Figure 6a may be omitted and the selection of the color setting may be performed without user intervention. The method may end in 620 after the color setting of the control unit has been adjusted.

It should be appreciated that the method of Figure 6b may be applied in addition to adjusting the color of light and/or brightness illuminated by the multi-color display, also to adjusting the color of light and/or brightness of one or more buttons in the control unit.

Figure 7 illustrates a block diagram of the control unit 700 for a transport refrigeration device according to an embodiment. The block diagram illustrates an example of the control unit capable of implementing various embodiments described herein. The control unit comprises a multi-color display 702, a light sensor 710, a light source 712, one or more buttons 714, a memory 708 and an interface unit 706 connected to a Processing Unit (PU) 704. The connections between the units may be electrical connections. The units of the control unit may be arranged on a circuit board, where electrical conductors connect the units to each other.

The light source and the multi-color display may be capable of illuminating one or more colors according to color settings defining vehicle instrument panel colors. The light source may be a LED for example. The buttons may be user operable buttons, e.g. push buttons. The buttons and the multi-color display operate as a user interface of the control unit. It should be appreciated that the multi-color display may be a touch screen, whereby at least part of the buttons or all the buttons may be provided by the multi-color display. Thus the multi-color display may display the user interface of the transport refrigeration device. The memory may store code, instructions or a computer program for executing one or more steps, functions and methods described in an embodiment. More particularly the memory may store color settings defining illumination colors of the multi-color display.

The control unit may further include a voice receiver (not shown) for example a microphone, whereby audible voice commands may be received by the control unit. The voice commands may be processed by a voice recognition functionality implemented by the processing unit and memory.

The light sensor may be ambient light photo sensor or color sensor. The light sensor measures an amount and/or color of light. The measurements of the light sensor may be obtained by the PU for applying a color setting to the control unit based on the measurements. The interface unit is connectable to the transport refrigeration device. The connection to the transport refrigeration device may be a two-way connection such that operation of the transport refrigeration device may be monitored and controlled. Temperature information and status information may be obtained from the cargo spaces via the interface unit and control, e.g. commands, may be sent to the refrigeration device for controlling the operation of the refrigeration device. The commands may cause cooling and/or heating of one or more of the cargo spaces.

The processing unit may be a computer processor, application-specific integrated circuit (ASIC), field-programmable gate array (FPGA), and/or any other hardware component that has been programmed in such a way to carry out one or more functions of an embodiment.

The memory may include volatile and/or non- volatile memory and typically stores content, data, or the like. For example, the memory may store computer program code such as software applications or operating systems, information, data, content, or the like for the processor to perform steps associated with operation of the apparatus in accordance with embodiments. In the illustrated embodiment, the memory may be, for example, random access memory (RAM), a hard drive, or other fixed data memory or storage device. Further, the memory, or part of it, may be removable memory detachably connected to the control unit.

An embodiment comprises a method of upgrading a vehicle. The vehicle may be a van, truck or a trailer. The vehicle has a vehicle cabin including an instrument panel. A control unit described in various embodiments herein may be installed to the instrument panel for operating a transport refrigeration device. The upgrading may be performed to a vehicle having an old transport refrigeration device and an old control unit for the transport refrigeration device, whereby the old control unit may be removed and a new one that is configured according to the various embodiments described herein may be installed to the instrument panel. On the other hand, the upgrading may be performed to a vehicle having no prior installation of transport refrigeration device, whereby the vehicle is upgraded to include all the parts of the transport refrigeration device including the control unit. The installation of the control unit to vehicle may be performed during manufacturing of the vehicle or as a retrofit. The features of the control panel facilitate supporting traffic safety during driving of the vehicle. Preferably, the control unit may be installed to a DIN slot in the vehicle instrument panel. Figure 2 illustrates an example of a vehicle cabin, where a control unit is installed.

The techniques described herein may be implemented by various means so that an apparatus implementing one or more functions of a control unit described with an embodiment comprises not only prior art means, but also means for implementing the one or more functions of a corresponding apparatus described with an embodiment and it may comprise separate means for each separate function, or means may be configured to perform two or more functions. For example, these techniques may be implemented in hardware (one or more apparatuses), firmware (one or more apparatuses), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) or article(s) of manufacture and executed by one or more processors/computers. The data storage medium or the memory unit may be implemented within the processor/computer or external to the processor/computer, in which case it can be communicatively coupled to the processor/computer via various means as is known in the art.

Thus, according to an embodiment, the apparatus comprises processing means configured to carry out any of the embodiments of Figures 6a and 6b. In an embodiment, the at least one processor 704, the memory 708 and a computer program code form an embodiment of processing means for carrying out the embodiments of the invention.

Embodiments as described may also be carried out in the form of a computer process defined by a computer program. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example.

It will be obvious to a person skilled in the art that, as the technology advances, the inventive concept can be implemented in various ways. The invention and its embodiments are not limited to the examples described above but may vary within the scope of the claims.

## Claims

1. A control unit for a transport refrigeration device, wherein the control unit comprises:
a multi-color display (302) for displaying at least one view including at least one graphical element;
a memory storing two or more color settings for the multi-color display (302), wherein the color settings define different illumination colors of the multi-color display (302); and
a processing unit operatively coupled with the multi-color display (302) and the memory, **characterized in that** the processing unit is arranged to cause:
applying a color setting to the multi-color display (302) of the transport refrigeration device, wherein the color setting applied contains illumination colors for the control unit that correspond to illumination colors of vehicle control devices and displays, wherein the vehicle control devices and displays comprise a speedometer (204), switches for headlights and wipers, a radio display (206), and/or an onboard computer display; wherein the vehicle control devices and displays comprise an onboard computer display and one or more of the following: a speedometer (204), switches for headlights and wipers, and a radio display (206),
displaying the view using the applied color setting, wherein the at least one graphical element is illuminated in a color defined by the applied color setting.

2. A control unit according to claim 1, **characterized in that** the control unit comprises one or more buttons (304a, 304b, 304c, 304d, 304e) arranged around the multi-color display (302), whereby the buttons (304a, 304b, 304c, 304d, 304e) are illuminated in the color defined the applied color setting.

3. A control unit according to claim 1 or 2, **characterized in that** the control unit comprises a light sensor for measuring brightness, and the illumination of the multi-color display (302) and/or one or more buttons (304a, 304b, 304c, 304d, 304e) arranged around the multi-color display (302) are adjusted on the basis of the vehicle cabin brightness.

4. A control unit according to any one of the preceding claims, **characterized in that** a plurality of views are arranged in parallel on the multi-color display (302), and each of the parallel views includes temperature information corresponding to one or more different cargo spaces.

5. A control unit according to any one of the preceding claims, **characterized in that** a plurality of views are arranged to be displayed in a rotational sequence.

6. A control unit according to claim 5, **characterized in that** transitions between the views are performed on the basis of a time period for displaying each view and/or a gesture of the user on a touch screen for displaying the views.

7. A control unit according to any one of the preceding claims, **characterized in that** a view comprises temperature information corresponding to a cargo space and a status indicator (308a, 308b) as a graphical element, said status indicator (308a, 308b) indicating an operation, for example cooling, heating or defrosting, being performed to the cargo space.

8. A control unit according to claim 7, **characterized in that** the view comprises a status and messaging portion above the temperature information and the status and messaging portion is separated from the temperature information by a graphical object illuminated in the color defined by the applied color setting.

9. A control unit according to any one of the preceding claims, **characterized in that** a view comprises a menu for selecting a color setting from a plurality of color settings, and the color setting to be applied is determined on the basis of a command from the user.

10. A control unit according to any one of the preceding claims, **characterized in that** the multi-color display (302) is a touch screen or a multi-touch screen.

11. A vehicle, including a vehicle cabin and, **characterized in that** a control unit according to any one of claims 1 to 10 is installed to an instrument panel of the vehicle.

12. A method for operating a control unit for a transport refrigeration device wherein the method comprises:
displaying on a multi-color display (302) at least one view including at least one graphical element;
defining a two or more color settings for the multi-color display (302), wherein the color settings define different illumination colors of the multi-color display (302), **characterized in that** the method further comprises:
applying at least one of the color settings to the multi-color display (302) of the transport refrigeration device, wherein the color setting applied contains illumination colors for the control unit that correspond to illumination colors of vehicle control devices and displays, wherein the vehicle control devices and displays comprise an onboard computer display and one or more of the following: a speedometer (204), switches for headlights and wipers, and a radio display (206),
displaying the view using the applied color setting wherein the at least one graphical element is illuminated in a color defined by the applied color setting.

13. A computer program embodied on a computer-readable storage medium, wherein the computer program comprising program to cause a control unit for a transport refrigeration device execute a method according to claim 12.

14. A transport refrigeration device **characterized in that** the transport refrigeration device comprises a control unit according to any one of claims 1 to 10.

## Patentansprüche

1. Steuereinheit für eine Transportkühlvorrichtung, wobei die Steuereinheit umfasst:
ein mehrfarbiges Display (302) zur Anzeige mindestens einer Ansicht mit mindestens einem grafischen Element;
einen Speicher, in dem zwei oder mehr Farbeinstellungen für das mehrfarbige Display (302) gespeichert sind, wobei die Farbeinstellungen unterschiedliche Beleuchtungsfarben des mehrfarbigen Displays (302) definieren; und
eine Verarbeitungseinheit, die mit dem mehrfarbigen Display (302) und dem Speicher wirkverbunden ist, **dadurch gekennzeichnet, dass** die Verarbeitungseinheit dafür ausgelegt ist zu bewirken:
Anwenden einer Farbeinstellung auf das mehrfarbige Display (302) der Transportkühlvorrichtung, wobei die angewendete Farbeinstellung Beleuchtungsfarben für die Steuereinheit enthält, die den Beleuchtungsfarben der Fahrzeug-Steuereinheiten und -Displays entsprechen, wobei die Fahrzeug-Steuereinheiten und -Displays einen Tachometer (204), Schalter für Scheinwerfer und Scheibenwischer, ein Radio-Display (206) und/oder ein Bordcomputer-Display umfassen;
wobei die Fahrzeug-Steuereinheiten und -Displays ein Bordcomputer-Display und eine oder mehrere der folgenden Komponenten umfassen: einen Tachometer (204), Schalter für Scheinwerfer und Scheibenwischer und ein Radio-Display (206),
Anzeigen der Ansicht unter Verwendung der angewendeten Farbeinstellung, wobei das mindestens eine grafische Element in einer Farbe beleuchtet wird, die durch die angewendete Farbeinstellung definiert ist.

2. Steuereinheit nach Anspruch 1, **dadurch gekennzeichnet, dass** die Steuereinheit eine oder mehrere um das mehrfarbige Display (302) angeordnete Tasten (304a, 304b, 304c, 304d, 304e) umfasst, wobei die Tasten (304a, 304b, 304c, 304d, 304e) in der Farbe beleuchtet werden, die durch die angewendete Farbeinstellung definiert ist.

3. Steuereinheit nach Anspruch 1 oder 2, **dadurch gekennzeichnet, dass** die Steuereinheit einen Lichtsensor zur Messung der Helligkeit umfasst und die Beleuchtung des mehrfarbigen Displays (302) und/oder einer oder mehrerer Tasten (304a, 304b, 304c, 304d, 304e), die um das mehrfarbige Display (302) angeordnet sind, basierend auf der Helligkeit der Fahrzeugkabine angepasst wird.

4. Steuereinheit nach einem der vorstehenden Ansprüche, **dadurch gekennzeichnet, dass** auf dem mehrfarbigen Display (302) eine Vielzahl von Ansichten parallel angeordnet sind und jede der parallelen Ansichten Temperaturinformationen enthält, die einem oder mehreren verschiedenen Laderäumen entsprechen.

5. Steuereinheit nach einem der vorstehenden Ansprüche, **dadurch gekennzeichnet, dass** eine Vielzahl von Ansichten dafür ausgelegt ist, in einer Rotationsfolge dargestellt zu werden.

6. Steuereinheit nach Anspruch 5, **dadurch gekennzeichnet, dass** Übergänge zwischen den Ansichten auf der Grundlage eines Zeitraums zur Anzeige jeder Ansicht und/oder einer Geste des Benutzers auf einem Touchscreen zur Anzeige der Ansichten durchgeführt werden.

7. Steuereinheit nach einem der vorstehenden Ansprüche, **dadurch gekennzeichnet, dass** eine Ansicht Temperaturinformationen, die einem Laderaum entsprechen, und eine Statusanzeige (308a, 308b) als grafisches Element umfasst, wobei die Statusanzeige (308a, 308b) einen Vorgang anzeigt, z. B. Kühlen, Heizen oder Abtauen, der in dem Laderaum durchgeführt wird.

8. Steuereinheit nach Anspruch 7, **dadurch gekennzeichnet, dass** die Ansicht einen Status- und Meldungsabschnitt oberhalb der Temperaturinformationen umfasst und der Status- und Meldungsabschnitt durch ein grafisches Objekt, das in der durch die angewendete Farbeinstellung definierten Farbe beleuchtet wird, von den Temperaturinformationen getrennt ist.

9. Steuereinheit nach einem der vorstehenden Ansprüche, **dadurch gekennzeichnet, dass** eine Ansicht ein Menü zur Auswahl einer Farbeinstellung aus einer Vielzahl von Farbeinstellungen umfasst und die anzuwendende Farbeinstellung auf der Grundlage eines Befehls von dem Benutzer festgelegt wird.

10. Steuereinheit nach einem der vorstehenden Ansprüche, **dadurch gekennzeichnet, dass** das mehrfarbige Display (302) ein Touchscreen oder ein Multi-Touchscreen ist.

11. Fahrzeug mit einer Fahrzeugkabine und **dadurch gekennzeichnet, dass** an einem Armaturenbrett des Fahrzeugs eine Steuereinheit nach einem der Ansprüche 1 bis 10 installiert ist.

12. Verfahren zum Betreiben einer Steuereinheit für eine Transportkühlvorrichtung, wobei das Verfahren umfasst:
Anzeigen auf einem mehrfarbigen Display (302) mindestens einer Ansicht mit mindestens einem grafischen Element;
Definieren von zwei oder mehr Farbeinstellungen für das mehrfarbige Display (302), wobei die Farbeinstellungen unterschiedliche Beleuchtungsfarben des mehrfarbigen Displays (302) definieren, **dadurch gekennzeichnet, dass** das Verfahren weiter umfasst:
Anwenden zumindest einer der Farbeinstellungen auf das mehrfarbige Display (302) der Transportkühlvorrichtung, wobei die angewendete Farbeinstellung Beleuchtungsfarben für die Steuereinheit enthält, die den Beleuchtungsfarben der Fahrzeug-Steuereinheiten und -Displays entsprechen, wobei die Fahrzeug-Steuereinheiten und -Displays ein Bordcomputer-Display und eine oder mehrere der folgenden Komponenten umfassen: einen Tachometer (204), Schalter für Scheinwerfer und Scheibenwischer und ein Radio-Display (204);
Anzeigen der Ansicht unter Verwendung der angewendeten Farbeinstellung, wobei das mindestens eine grafische Element in einer Farbe beleuchtet wird, die durch die angewendete Farbeinstellung definiert ist.

13. Computerprogramm, das auf einem computerlesbaren Speichermedium ausgeführt ist, wobei das Computerprogramm das Programm enthält, das eine Steuereinheit für eine Transportkühlvorrichtung veranlasst, ein Verfahren nach Anspruch 12 auszuführen.

14. Transportkühlvorrichtung, **dadurch gekennzeichnet, dass** die Transportkühlvorrichtung eine Steuereinheit nach einem der Ansprüche 1 bis 10 umfasst.

## Revendications

1. Unité de commande pour un dispositif de transport réfrigéré, dans laquelle l'unité de commande comprend :
un dispositif d'affichage à plusieurs couleurs (302) pour afficher au moins une vue comportant au moins un élément graphique ;
une mémoire stockant deux réglages de couleur ou plus pour le dispositif d'affichage à plusieurs couleurs (302), dans laquelle les réglages de couleur définissent différentes couleurs d'éclairage du dispositif d'affichage à plusieurs couleurs (302) ; et
une unité de traitement couplée pour un fonctionnement au dispositif d'affichage à plusieurs couleurs (302) et à la mémoire, **caractérisée en ce que** l'unité de traitement est agencée pour provoquer :
l'application d'un réglage de couleur au dispositif d'affichage à plusieurs couleurs (302) du dispositif de transport réfrigéré, dans laquelle le réglage de couleur appliqué contient des couleurs d'éclairage pour l'unité de commande qui correspondent à des couleurs d'éclairage de dispositifs de commande et de dispositifs d'affichage de véhicule, dans laquelle les dispositifs de commande et les dispositifs d'affichage de véhicule comprennent un indicateur de vitesse (204), des commutateurs pour feux et essuie-glaces, un dispositif d'affichage radio (206), et/ou un dispositif d'affichage d'ordinateur embarqué ;
dans laquelle les dispositifs de commande et les dispositifs d'affichage de véhicule comprennent un dispositif d'affichage d'ordinateur embarqué et un ou plusieurs des éléments suivants : un indicateur de vitesse (204), des commutateurs pour feux et essuie-glaces, et un dispositif d'affichage radio (206),
l'affichage de la vue en utilisant le réglage de couleur appliqué, dans laquelle l'au moins un élément graphique est éclairé dans une couleur définie par le réglage de couleur appliqué.

2. Unité de commande selon la revendication 1, **caractérisée en ce que** l'unité de commande comprend un ou plusieurs boutons (304a, 304b, 304c, 304d, 304e) agencés autour du dispositif d'affichage à plusieurs couleurs (302), les boutons (304a, 304b, 304c, 304d, 304e) étant ainsi éclairés dans la couleur définie par le réglage de couleur appliqué.

3. Unité de commande selon la revendication 1 ou 2, **caractérisée en ce que** l'unité de commande comprend un capteur de lumière pour mesurer la luminosité et l'éclairage du dispositif d'affichage à plusieurs couleurs (302), et/ou un ou plusieurs boutons (304a, 304b, 304c, 304d, 304e) agencés autour du dispositif d'affichage à plusieurs couleurs (302) sont ajustés sur la base de la luminosité d'habitacle de véhicule.

4. Unité de commande selon l'une quelconque des revendications précédentes, **caractérisée en ce qu'**une pluralité de vues sont agencées en parallèle sur le dispositif d'affichage à plusieurs couleurs (302), et chacune des vues parallèles comporte des informations de température correspondant à un ou plusieurs espaces de chargement différents.

5. Unité de commande selon l'une quelconque des revendications précédentes, **caractérisée en ce qu'**une pluralité de vues sont agencées pour être affichées dans une séquence de rotation.

6. Unité de commande selon la revendication 5, **caractérisée en ce que** les transitions entre les vues sont réalisées sur la base d'une période de temps pour afficher chaque vue et/ou d'un geste de l'utilisateur sur un écran tactile pour afficher les vues.

7. Unité de commande selon l'une quelconque des revendications précédentes, **caractérisée en ce qu'**une vue comprend des informations de température correspondant à un espace de chargement et un indicateur d'état (308a, 308b) sous la forme d'élément graphique, ledit indicateur d'état (308a, 308b) indiquant une opération, par exemple de refroidissement, de chauffage ou de dégivrage, en cours de réalisation sur l'espace de chargement.

8. Unité de commande selon la revendication 7, **caractérisée en ce que** la vue comprend une partie d'état et de messagerie au-dessus des informations de température, et la partie d'état et de messagerie est séparée des informations de température par un objet graphique éclairé dans la couleur définie par le réglage de couleur appliqué.

9. Unité de commande selon l'une quelconque des revendications précédentes, **caractérisée en ce qu'**une vue comprend un menu pour sélectionner un réglage de couleur parmi une pluralité de réglages de couleur, et le réglage de couleur à appliquer est déterminé sur la base d'un ordre de l'utilisateur.

10. Unité de commande selon l'une quelconque des revendications précédentes, **caractérisée en ce que** le dispositif d'affichage à plusieurs couleurs (302) est un écran tactile ou un écran tactile multipoint.

11. Véhicule, comportant un habitacle de véhicule et **caractérisé en ce qu'**une unité de commande selon l'une quelconque des revendications 1 à 10 est installée sur un tableau de bord du véhicule.

12. Procédé pour faire fonctionner une unité de commande pour un dispositif de transport réfrigéré dans lequel le procédé comprend :
l'affichage, sur un dispositif d'affichage à plusieurs couleurs (302), d'au moins une vue comportant au moins un élément graphique ;
la définition de deux réglages de couleur ou plus pour le dispositif d'affichage à plusieurs couleurs (302), dans lequel les réglages de couleur définissent différentes couleurs d'éclairage du dispositif d'affichage à plusieurs couleurs (302), **caractérisé en ce que** le procédé comprend en outre :
l'application d'au moins un des réglages de couleur au dispositif d'affichage à plusieurs couleurs (302) du dispositif de transport réfrigéré, dans lequel le réglage de couleur appliqué contient des couleurs d'éclairage pour l'unité de commande qui correspondent à des couleurs d'éclairage de dispositifs de commande et de dispositifs d'affichage de véhicule, dans lequel les dispositifs de commande et les dispositifs d'affichage de véhicule comprennent un dispositif d'affichage d'ordinateur embarqué et un ou plusieurs des éléments suivants : un indicateur de vitesse (204), des commutateurs pour feux et essuie-glaces, et un dispositif d'affichage radio (206),
l'affichage de la vue en utilisant le réglage de couleur appliqué, dans lequel l'au moins un élément graphique est éclairé dans une couleur définie par le réglage de couleur appliqué.

13. Programme informatique incorporé sur un support de stockage lisible par ordinateur, dans lequel le programme informatique comprend un programme pour amener une unité de commande pour un dispositif de transport réfrigéré à exécuter un procédé selon la revendication 12.

14. Dispositif de transport réfrigéré **caractérisé en ce que** le dispositif de transport réfrigéré comprend une unité de commande selon l'une quelconque des revendications 1 à 10.
